# NEUE EUROPÄISCHE PATENTSCHRIFT

(11) **EP 0 298 282 B2**
(45) Veröffentlichungstag und Bekanntmachung des Hinweises auf die Entscheidung über den Einspruch: **29.12.1997**
(45) Hinweis auf die Patenterteilung: 12.04.1995
(21) Anmeldenummer: 88109460.1
(22) Anmeldetag: 14.06.1988
(51) Int. Cl.: B32B 27/30, C08L 27/06

(54) **Folie und Verfahren zu deren Herstellung**
Film and process for its preparation
Film et procédé pour sa préparation

(30) Priorität: 08.07.1987 DE 3722472
(43) Veröffentlichungstag der Anmeldung: 11.01.1989
(73) Patentinhaber: ALKOR GMBH KUNSTSTOFFE, D-81451 München (DE)
(72) Erfinder: Fink, Roland, Dipl.-Ing., D-8130 Starnberg (DE); Huber-Hesselberger, Josef, Dipl.-Ing. (FH), D-8000 München 50 (DE)

(56) Entgegenhaltungen:
- EP-A- 0 101 900
- EP-B- 0 099 455
- DE-A- 3 227 107
- DE-A- 3 229 078
- FR-A- 2 149 932
- GB-A- 911 105
- GB-A- 1 031 424
- Römpps Chemie-Lexikon, 8. Aufl., Bd. 4, 1985, S. 3201/3202
- Kunststoff-Handbuch, 2. Aufl., 1986, S. 1182, 1354-1356

## Beschreibung

Die Erfindung betrifft eine tiefziehfähige Folie für Kraftfahrzeuginnenräume mit einer Foliendicke von 500 - 1800 µm
enthaltend Mischungen von Vinylchloridhomo-, -co-, -ter- und/oder -Pfropfpolymerisat, Styrol-Acrylnitril-Butadien-Pfropfpolymerisat (ABS) sowie ein Plastifiziermittel auf der Basis eines plastifizierenden Hochpolymeren mit polaren Gruppen, das ein Molekulargewicht von größer als 50 000 aufweist und mit Polyvinylchlorid verträglich ist oder eine Phase bildet, gegebenenfalls mit einer an der Folie oder Unterfolie angeordneten Schaumschicht oder Hinterschäumung, wobei die Folie als Monofolie oder als Schicht einer Verbundfolie ausgebildet ist, vorzugsweise als Unterfolie oder Unterschicht einer Verbundfolie mit einer Oberfolie oder Oberflächenschicht auf der Basis eines Polymeren oder Polymergemisches sowie gegebenenfalls eines Plastifiziermittels auf der Basis eines plastifizierenden Hochpolymeren mit polaren Gruppen, das ein Molekulargewicht von größer als 50 000 aufweist und mit Polyvinylchlorid verträglich ist oder eine Phase bildet, wobei als Polymergemische Mischungen von Polyvinylchlorid mit einem oder mehreren anderen Kunstharzen bevorzugt sind. Gemäß der Erfindung werden bestimmte Plastifiziermittel verwendet, der ABS-Gehalt ganz oder teilweise ersetzt und eine bestimmte Rezeptur eingehalten.

In der EP-A 0101900 ist bereits eine thermoplastische Formmasse beschrieben, die
A) 25 - 50 Gew.-Teile eines Vinylchloridhomo- oder -copolymerisates,
B) 25 - 30 Gew.-Teile eines ABS-Polymerisates, hergestellt durch Pfropfpolymerisation von 30 - 95 Gew.-Teilen eines monomeren Gemisches aus Styrol, Methylmethacrylat, β-Methylstyrol, einzeln oder in Abmischung einerseits und Acrylmethyl andererseits im Verhältnis 90 : 10 bis 60 : 40 auf 70 - 50 Gew.-Teilen eines Butadien-Homo- oder -copolymerisates, wobei der resultierende gepfropfte Kautschuk eine mittlere Teilchengröße von 0,05 bis 5 µm aufweist,
C) 0 - 10 Gew.-Teile eines harzartigen, thermoplastischen Copolymerisates aus einem Styrol-Acrylnitril- bzw. Methylmetha crylat-Acrylnitril-Copolymeren, das einen Staudinger Index η von größer = 3 -4 dl/g, besitzt und dessen η-Wert in jedem Fall über dem des im Grundpolymeren liegt,
D) 50 - 40 Gew.-Teile eines Ethylen-Vinylacetat- oder eines EthyIen--Acrylester-Copolymerisates oder eines Ethylen-Vinylacetat-Kohlenmonoxid-Copolymersates,
E) 3 - 30 Gew.-Teile einer Butadien-Acrylnitril-Copolymerisat-Kautschuk-Komponente und
F) 0 - 15 Gew.-Teile eines Polyesterpolyurethans auf der Basis von aliphatischen Polyestern und Polycyanaten.

Diese Formmassen gemäß EP-A-0101900 können im Spritzgußverfahren, durch Extrusion, im Hohlkörperblasverfahren, Tiefziehverfahren und durch Kalandrieren verarbeitet werden und sind auch zur Weiterverarbeitung zu Folien geeignet.

Aus der FR-A-2149932 sind Terpolymerisate aus Ethylen, Kohlenmonoxid und unterschiedlichen Termonomeren, die aus der Gruppe der Monocarbonsäuren oder ungesättigten Dicarbonsäuren mit 2 bis 20 C-Atomen, der Gruppe der ungesättigten oder gesättigten Monocarbonsäuren oder Dicarbonsäuren und deren Ester, den Vinylestern gesättigter Carbonsäuren mit 1 bis 18 C-Atomen, und dergleichen bekannt, wobei sich eine große Anzahl der unterschiedlichsten einzusetzenden Verbindungen ergibt. Diesen Terpolymeren können zahlreiche Polymere und Copolymere zugefügt werden, wobei auch Polymere oder Copolymerisate wie Polyvinylchlorid oder ABS genannt werden. Eine bestimmte Auswahl an bestimmten Polymeren unter Verwendung bestimmter Gewichtsverhältnisse wird gemäß der FR-A-2149932 nicht getroffen. Gemäß den Beispielen werden den Terpolymerisaten überwiegend Vinylchloridhomo- und -copolymerisate zugefügt, denn sie werden insbesondere zur Herstellung harter oder halbharter Produkte und Blasfolien verwendet.

Aus der DE-A-3227107 sind Kraftfahrzeugfolien bekannt, die auch Plastifizierungsmittelgemische enthalten und bei denen immer ein bestimmter PVC-ABS-Gehalt (PVC-ABS-Gehalt der Unterfolie mehr als 40 Gew.-%, vorzugsweise mehr als 50 Gew.-%) enthalten sein muß.

Bei den alterungsbeständigen Folien gemäß DE-OS-3227107 können im Falle starker Belastungen, insbesondere bei starken Lichteinwirkungen und hohen Temperaturen (über 100 °C) unerwünschte Farbänderungen, Dehnungsverminderung oder Dehnungsabfälle und dgl. auftreten.

Ziel und Aufgabe der vorliegenden Erfindung war es, die Eigenschaften der Folien zu verbessern. Es sollte eine Verbesserung der Farbbeständigkeit bei Lichteinwirkung und bei Auftreten höherer Temperaturen ein verminderter Dehnungsabfall erzielt werden.

Die Erfindung, für die Schutz begehrt wird, ist in den Ansprüchen 1 bis 8 gekennzeichnet.

### Beispiele

| | Gew.-Teile |
|---|---|
| | |

| 1. Beispiel für eine Unterfolie | |
|---|---|
| Suspensions-Polyvinylchlorid (PVC) 27,59 % | 40,0 |
| Acrylnitril-Styrol-Acrylsäureester-Pfropfpolymerisat (ASA) 34,48 % | 50,0 |
| Styrol-Acrylnitril-Copolymerisat (SAN) 6,89 % | 10,0 |
| Acrylnitril-Butadienharz (NBR) 6,89 % | 10,0 |
| Ethylen-Butylacrylat-Kohlenmonoxid-Terpolymer 24,15 % | 35,0 |

| 2. Beispiel für eine Unterfolie | |
|---|---|
| Suspensions-Polyvinylchlorid (PVC) 37,04 % | 50,0 |
| Acrylnitril-Styrol-Acrylsäureester-Pfropfpolymerisat (ASA) 37,04 % | 50,0 |
| Polymethylmethacrylat (PMMA) 3,70 % | 5,0 |
| Ethylen-Butylacrylat-Kohlenmonoxid-Terpolymer 22,22 % | 30,0 |

| 3. Beispiel für eine Oberfolie | |
|---|---|
| Suspensions-Polyvinylchlorid (PVC) 71,43 % | 100 |
| Ethylen-Butylacrylat-Kohlenmonoxid-Terpolymer 28,57 % | 40,0 |

| 4. Beispiel für eine Oberfolie | |
|---|---|
| Suspensions-Polyvinylchlorid (PVC) 57,14 % | 80,0 |
| Acrylnitril-Styrol-Acrylsäureester-Pfropfpolymerisat (ASA) 14,29 % | 20,0 |
| Ethylen-Butylacrylat-Kohlenmonoxid-Terpolymer 28,57 % | 40,0 |

Als Additive wurden bei den Beispielen 1 bis 4 (neben Weichmachern) folgende Verarbeitungshilfs- und Zusatzmittel verwendet:

| | |
|---|---|
| Trimellithsäureester | 5,0 |
| Octyl-S-Sn-Stabilisator | 3,0 |
| Antioxidans | 1,0 |
| Verarbeitungshilfsmittel | 1,5 |
| Gleitmittel | 0,5 |
| Flammschutzmittel | 3,0 |
| Coantioxidans | 1,0 |

### Zeichnungsbeschreibung

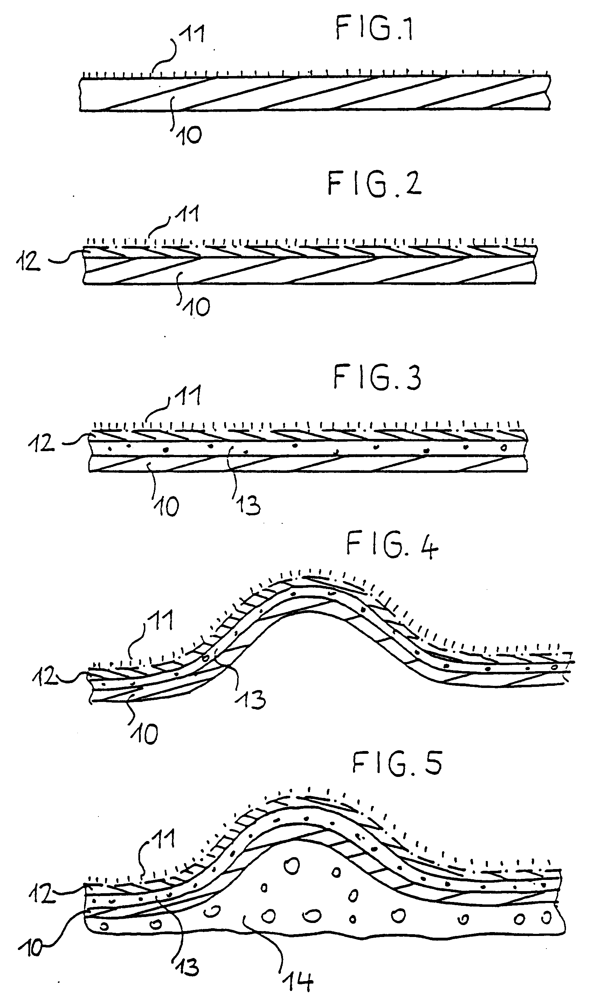

Die beigefügten Figuren 1 - 5 zeigen schematisch die erfindungsgemäßen Folien.

In Fig. 1 ist eine Folie (10) mit Lack (11) (beispielsweise aus PVC-Acrylat-Lack) auf der Sichtseite schematisch dargestellt.

In Fig. 2 ist die Unterfolie (10) mit der Oberfolie (12) zu sehen, auf deren Sichtseite eine Lackschicht (11) angebracht ist.

In Fig. 3 ist eine Mehrschichttolie schematisch dargestellt. Die Unterfolien (10) und (13) können aus dem gleichen oder unterschiedlichen Material bestehen. Die Oberfolie (12) wird mit einer Beschichtung bzw. einem Lack versehen.

In Fig. 4 ist die in Fig. 3 dargestellte Mehrschichtfolie thermoplastisch verformt.

In Fig. 5 ist ein Formkörper dargestellt, bestehend aus der thermoplastisch verformten Mehrschichtfolie, die z. B. mit Polyurethanharzschaum (14) hinterschäumt ist.

## Patentansprüche

1. Tiefziehfähige Folie für Kraftfahrzeuginnenräume mit einer Foliendicke von
500 bis 1800 µm
enthaltend Mischungen von Vinylchloridhomo-, -co-, -ter- und/oder -pfropfpolymerisat, Styrol-Acrylnitril-Butadien-Pfropfpolymerisat (ABS) sowie ein Plastifiziermittel auf der Basis eines plastifizierenden Hochpolymeren mit polaren Gruppen, das ein Molekulargewicht von größer als 50.000 aufweist und mit Polyvinylchlorid verträglich ist oder eine Phase bildet, gegebenenfalls mit einer an der Folie oder Unterfolie angeordneten Schaumschicht oder Hinterschäumung, wobei die Folie als Schicht einer Verbundfolie ausgebildet ist, vorzugsweise als Unterfolie oder Unterschicht einer Verbundfolie mit einer Oberfolie oder Oberflächenschicht auf der Basis eines Polymeren oder Polymergemisches sowie gegebenenfalls eines Plastifiziermittels auf der Basis eines plastifizierenden Hochpolymeren mit polaren Gruppen, das ein Molekulargewicht von größer als 50.000 aufweist und mit Polyvinylchlorid verträglich ist oder eine Phase bildet, wobei als Polymergemische Mischungen von Polyvinylchlorid mit einem oder mehreren anderen Kunstharzen bevorzugt sind, dadurch gekennzeichnet, daß das polare Gruppen aufweisende Plastifiziermittel oder Plastifiziermittelgemisch der Unter- und/oder Oberfolie aus Ethylen-Burylacrylat-Kohlenmonoxid-Terpolymerisat und/oder Ethylen-Hexylacrylat-Kohlenmonoxid-Terpolymerisat mit statistisch verteilten Kohlenmonoxid- und Acrylatgruppen und einem Alkyl-Acrylat-Gehalt von mehr als 12 % (berechnet auf das jeweilige polare Gruppen enthaltende Plastifiziermittel mit 100 Gew.-Teilen) besteht, dadurch, daß das Styrol-Acrylnitril-Butadien-Pfropfpolymerisat (ABS) ganz oder teilweise ersetzt ist durch ein anderes Pfropfpolymerisat, das aus Styrol-Acrylnitril-Copolymerisat (SAN) und/oder Styrol-Maleinsäureanhydrid-Copolymerisat (SMA) mit einem anderen Elastomeren hergestellt ist, vorzugsweise durch Acrylnitril-Styrol-Acrylester (ASA), und dadurch, daß die Folienschicht(en), bezogen auf 100 Gew.-Teile der Polymermischung oder Polymerlegierung zusätzlich
2 bis 20 Gew.-Teile
eines oder mehrerer Verarbeitungshilfsmittel
0 bis 50 Gew.-Teile
eines Zusatzmittels oder Zusatzmittelgemisches sowie
0,1 bis 10 Gew.-Teile
mindestens eines schwerflüchtigen Weichmachers enthält (enthalten), wobei die Verbundfolie mindestens eine Unterfolie oder Unterschicht enthält, die (bezogen auf 100 Gew.-% Polymere) aus
15 bis 40 Gew.-%
Vinylchloridhomo-, -co-, -ter- und/oder -pfropfpolymerisat und/oder Legierungen auf der Basis von Polyvinylchlorid
17 bis 50 Gew.-%
Acrylnitril-Butadien-Styrol (ABS), wobei das Acrylnitril-Butadien-Styrol-Pfropfpolymerisat (ABS) durch Acrylnitril-Styrol-Acrylester (ASA) und/oder Styrol-Maleinsäureanhydrid-Butadien
zu 40 bis 100 Gew.-%
(bezogen auf das eingesetzte ABS) ersetzt ist,
38 bis 10 Gew.-%
des polare Gruppen enthaltende Plastifiziermittels,
15 bis 0 Gew.-%
Styrol-Maleinsäureanhydrid-Copolymerisat (SMA), Methacryl-Acrylsäureester-Copolymerisat und/oder Styrol-Acrylnitril-Copolymerisat (SAN) und/oder
15 bis 0 Gew.-%
mindestens eines teilvernetzten und/oder elastomeren Modifizierungsmittels in Form von Acrylester-Copolymerisat und/oder Acrylnitril-Butadien-Copolymerisat, besteht, mit der Maßgabe, daß der Prozentgehalt an Vinylchloridhomo- -co-, -ter- und/oder -pfropfpolymerisat in der bzw. den Unterfolie(n) oder Unterschicht(en) kleiner ist als der in der bzw. den Oberfolie(n) oder Oberschicht(en).

2. Folie nach Anspruch 1, dadurch gekennzeichnet, daß der Gehalt des polare Gruppen enthaltenden Plastifiziermittels oder polare Gruppen enthaltenden Plastifiziermittelgemisches in der Unterfolie und/oder Oberfolie größer als 5 Gew.-% und kleiner als 50 Gew.-% (bezogen auf 100 Gew.-% Polymergemisch) ist.

3. Folie nach Ansprüchen 1 und 2, dadurch gekennzeichnet, daß der prozentuale Gehalt des polare Gruppen enthaltende Plastifiziermittels oder Plastifiziermittelgemisches in der bzw. den Unterfolie(n) oder Unterschicht(en) größer ist als der in der bzw. den Oberfolie(n) oder Oberschicht(en).

4. Folie nach einem oder mehreren der Ansprüche 1 bis 3, dadurch gekennzeichnet, daß die aus mindestens einer Unterfolie oder Unterschicht und mindestens einer Oberfolie oder Oberschicht bestehende Verbundfolie mindestens eine Unterfolie oder Unterschicht enthält, die (bezogen auf 100 Gew.-% Polymere) aus
20 bis 35 Gew.-%
Vinylchloridhomo-, -co-, -ter- und/oder -pfropfpolymerisat und/oder Legierungen auf der Basis von Polyvinylchlorid
20 bis 40 Gew.-%
Acrylnitril-Butadien-Styrol (ABS), wobei das Acrylnitril-Butadien-Styrol-Pfropfpolymerisat (ABS) durch Acrylnitril-Styrol-Acrylat (ASA) und/oder Styrol-Maleinsäureanhydrid-Butadien
zu 40 bis 100 Gew.-%
(bezogen auf das eingesetzte ABS) ersetzt ist,
35 bis 15 Gew.-%
des polare Gruppen enthaltende Plastifiziermittels,
12,5 bis 5 Gew.-%
mindestens eines Copolymerisates des Styrols, Acrylates und/oder Methacrylates, vorzugsweise Styrol-Mäleinsäureanhydrid-Copolymerisat (SMA), Methacrylat-Acrylsäureester-Copolymerisat und/oder Styrol-Acrylritril-Copolymerisat und/oder
12,5 bis 5 Gew.-%
mindestens eines teilvernetzten und/oder elastomeren Modifizierungsmittels, vorzugsweise Acrylester-Copolymerisat und/oder Acrylnitril-Butadien-Copolymerisat besteht.

5. Folie nach einem oder mehreren der Ansprüche 1 bis 4, dadurch gekennzeichnet, daß die Verbundfolie mindestens eine Oberfolie oder Oberschicht enthält, die (bezogen auf 100 Gew.-% Polymere) aus
15 bis 80 Gew.-%, vorzugsweise
30 bis 78 Gew.-%,
Vinylchloridhomo-, -co-, -ter- und/oder -pfropfpolymerisat und/oder Legierungen auf der Basis von Polyvinylchlorid
30 bis 0 Gew.-%, vorzugsweise
27 bis 1 Gew.-%,
Pfropfpolymerisat und/oder Copolymerisat auf der Basis von Styrol, Acrylnitril und/oder Maleinsäureanhydrid, vorzugsweise auf der Basis oder bestehend aus Acrylnitril-Styrol-Acrylester (ASA) und/oder Styrol-Maleinsäureanhydrid-Butadien, das gegebenenfalls geringe Gewichtsmengen (Gewichtsmengen bis zu 4 Gew.-%, vorzugsweise unter 2 Gew.-%) Acrylnitril-Butadien-Styrol-Co- und/oder -pfropfpolymerisat (ABS) enthalten kann,
40 bis 20 Gew.-%, vorzugsweise
35 bis 21 Gew.-%,
des polare Gruppen enthaltende Plastifiziermittels,
10 bis 0 Gew.-%, vorzugsweise
5 bis 0,5 Gew.-%,
mindestens eines Copolymerisates des Styrols, Acrylates und/oder Methacrylates, vorzugsweise Styrol-Maleinsäureanhydrid- Copolymerisat (SMA), Methacryl-Acrylsäureester-Copolymerisat und/oder Styrol-Acrylnitril-Copolymerisat und/oder
5 bis 0 Gew.-%, vorzugsweise
3 bis 0,5 Gew.-%
mindestens eines teilvernetzten und/oder elastomeren Modifizierungsmittels, vorzugsweise Acrylester-Copolymerisat und/oder Acrylnitril-Butadien-Copolymerisat besteht.

6. Folie nach einem oder mehreren der Ansprüche 1 bis 5, dadurch gekennzeichnet, daß die Folie(n) oder Folienschicht(en), bezogen auf 100 Gew.-Teile der Polymermischung oder Polymerlegierung,
3 bis 15 Gew.-Teile
eines oder mehrerer Verarbeitungshilfsmittel, vorzugsweise Gleitmittel, Stabilisatoren, Fließfähigkeitsverbesserungsmittel und/oder Antioxidantien
0,5 bis 30 Gew.-Teile
eines Zusatzmittel oder Zusatzmittelgemisches, vorzugsweise mindestens eines Füllstoffes, mindestens eines Mittels zum Schwerentflammbarmachen, mindestens eines Farbstoffes oder Farbpigmentes, sowie
0,1 bis 10 Gew.-Teile
mindestens eines schwerflüchtigen, vorzugsweise migrationsbeständigen, Weichtmachers enthält (enthalten).

7. Folie nach einem oder mehreren der Ansprüche 1 bis 6, dadurch gekennzeichnet, daß die Folie aus mindestens einer Unterfolie oder Unterschicht und mindestens einer Oberfolie oder Oberschicht besteht, wobei die qualitative und quantitative Zusammensetzung zwischen Unterfolie(n) oder Unterschicht(en) und Oberfolie(n) oder Oberschicht(en) unterschiedlich sind.

8. Folie nach einem oder mehreren der Ansprüche 1 bis 7, dadurch gekennzeichnet, daß die Oberflächenfolie mit einer Lackschicht oder Kunststoffbeschichtung, vorzugsweise auf der Basis von Acrylatharzen, Polyvinylchlorid-Acrylatharzen, Polyurethanharzen und/oder Epoxidharzen auf ihrer freien Oberflächenschicht überzogen ist.

## Claims

1. A negatively thermoformable sheet for motor vehicle interiors having a sheet thickness of
500 to 1800 µm,
containing mixtures of vinyl chloride homo-, co-, ter- and/or graft polymer, styrene-acrylonitrile-butadiene graft polymer (ABS), and a plasticising agent based on a plasticising high polymer containing polar groups which has a molecular weight greater than 50,000 and which is compatible with or forms one phase with polyvinyl chloride, optionally having a foamed layer or foamed backing layer disposed on the sheet or lower sheet, wherein the sheet is formed as a layer of a composite sheet, preferably as a lower sheet or lower layer of a composite sheet having an upper sheet or surface layer based on a polymer or polymer mixture, and optionally on a plasticising agent based on a plasticising high polymer containing polar groups, which has a molecular weight greater than 50,000 and which is compatible with or forms one phase with polyvinyl chloride, wherein mixtures of polyvinyl chloride with one or more other synthetic resins are preferred as the polymer mixtures, characterised in that the plasticising agent or plasticising agent mixture containing polar groups of the lower and/or of the upper sheet consists of an ethylene-butyl acrylate-carbon monoxide terpolymer and/or of an ethylene-hexyl acrylate-carbon monoxide terpolymer comprising randomly distributed carbon monoxide and acrylate groups and has an alkyl acrylate content of more than 12 % (calculated based on 100 parts by weight of the respective plasticising agent which contains polar groups), in that the styrene-acrylonitrile-butadiene graft polymer (ABS) is completely or partially replaced by another graft polymer which is produced from styrene-acrylonitrile copolymer (SAN) and/or styrene-maleic anhydride copolymer (SMA) with another elastomer, preferably by acrylonitrile-styrene-acrylic ester (ASA), and in that the sheet layer(s) additionally contains (contain), based on 100 parts by weight of the polymer mixture or polymer alloy,
2 to 20 parts by weight
of one or more auxiliary processing aids,
0 to 50 parts by weight
of an additive or additive mixture, and
0.1 to 10 parts by weight
of at least one difficultly volatile softener, wherein the composite sheet contains at least one lower sheet or lower layer which consists (based on 100 weight % of polymer) of
15 to 40 weight %
of a vinyl chloride homo-, co-, ter- and/or graft polymer and/or of alloys based on polyvinyl chloride,
17 to 50 weight %
of acrylonitrile-butadiene-styrene (ABS), wherein
40 to 100 weight %
(based on the ABS used) of the acrylonitrile-butadiene-styrene graft polymer (ABS) is replaced by acrylonitrile-styrene-acrylic ester (ASA) and/or styrene-maleic anhydride-butadiene,
38 to 10 weight %
of the plasticising agent containing polar groups,
15 to 0 weight %
of styrene-maleic anhydride copolymer (SMA), methacrylic-acrylic acid ester copolymer and/or styrene-acrylonitrile copolymer, and/or
15 to 0 weight %
of at least one partially crosslinked and/or elastomeric modifier, in the form of an acrylic ester copolymer and/or acrylonitrile-butadiene copolymer, with the proviso that the percentage content of vinyl chloride homo-, co-, ter- and/or graft polymer in the lower sheet(s) or lower layer(s) is less than that in the upper sheet(s) or upper layer(s).

2. A sheet according to claim 1, characterised in that the content of the plasticising agent containing polar groups or plasticising agent mixture containing polar groups in the lower sheet and/or upper sheet is greater than 5 weight % and less than 50 weight % (based on 100 weight % of the polymer mixture).

3. A sheet according to claims 1 and 2, characterised in that the percentage content of the plasticising agent or plasticising agent mixture containing polar groups in the lower sheet(s) and/or lower layer(s) is greater than that in the upper sheet(s) or upper layer(s).

4. A sheet according to one or more of claims 1 to 3, characterised in that the composite sheet, consisting of at least one lower sheet or lower layer and of at least one upper sheet or upper layer, contains least one lower sheet or lower layer which (based on 100 % by weight of polymer), consists of
20 to 35 % by weight
of vinyl chloride homo-, co-, ter- and/or graft polymer and/or alloys based on polyvinyl chloride,
20 to 40 weight %
of acrylonitrile-butadiene-styrene (ABS), wherein
40 to 100 weight %
(based on the ABS used) of the acrylonitrile-butadiene-styrene graft polymer (ABS) is replaced by acrylonitrile-styrene-acrylate (ASA) and/or styrene-maleic anhydride-butadiene,
35 to 15 weight %
of the plasticising agent containing polar groups,
12.5 to 5 weight %
of at least one copolymer of styrene, acrylate and/or methacrylate, preferably styrene-maleic anhydride copolymer (SMA), methacrylic-acrylic acid ester copolymer and/or styrene-acrylonitrile copolymer, and/or
12.5 to 5 weight %
of at least one partially crosslinked and/or elastomeric modifier, preferably acrylic ester copolymer and/or acrylonitrile-butadiene copolymer.

5. A sheet according to one or more of claims 1 to 4, characterised in that the composite sheet contains at least one upper sheet or upper layer, which (based on 100 weight % of polymer) consists of
15 to 80 weight %, preferably
30 to 78 weight %
of vinyl chloride homo-, co-, ter- and/or graft polymer and/or alloys based on polyvinyl chloride,
30 to 0 weight %, preferably
27 to 1 weight %
of a graft polymer and/or copolymer based on styrene, acrylonitrile and/or maleic anhydride, preferably based on or consisting of acrylonitrile-styrene-acrylic ester (ASA) and/or styrene-maleic anhydride-butadiene, which may optionally contain small amounts by weight (amounts by weight up to 4 weight %, preferably less than 2 weight %) of acrylonitrile-butadiene-styrene co- and/or graft polymer (ABS),
40 to 20 weight %, preferably
35 to 21 weight %
of the plasticising agent containing polar groups,
10 to 0 weight %, preferably
5 to 0.5 weight %
of at least one copolymer of styrene, acrylate and/or methacrylate, preferably styrene-maleic anhydride copolymer (SMA), methacrylic-acrylic acid ester copolymer and/or styrene-acrylonitrile copolymer, and/or
5 to 0 weight %, preferably
3 to 0.5 weight %
of at least one partially crosslinked and/or elastomeric modifier, preferably an acrylic ester copolymer and/or an acrylonitrile-butadiene copolymer.

6. A sheet according to one or more of claims 1 to 5, characterised in that the sheet(s) or sheet layer(s) contains (contain), based on 100 parts by weight of the polymer mixture or polymer alloy,
3 to 15 parts by weight
of one or more auxiliary processing aids, preferably internal lubricants, stabilisers, flowability enhancers and/or antioxidants,
0.5 to 30 parts by weight
of an additive or additive mixture, preferably at least one filler, at least one agent for conferring flame-retardancy, at least one colorant or coloured pigment, as well as
0.1 to 10 parts by weight
of at least one difficultly volatile softener which is preferably resistant to migration.

7. A sheet according to one or more of claims 1 to 6, characterised in that the sheet consists of at least one lower sheet or lower layer and at least one upper sheet or upper layer, wherein the qualitative and/or quantitative composition of the lower sheet(s) or lower layer(s) differs (differ) from that of the upper sheet(s) or upper layer(s).

8. A sheet according to one or more of claims 1 to 7, characterised in that the surface sheet is coated on its free surface layer with a lacquer coat or plastic coating, preferably based on acrylate resins, polyvinyl chloride-acrylate resins, polyurethane resins and/or epoxy resins.

## Revendications

1. Feuille apte à l'emboutissage pour des habitacles de véhicules automobiles, ayant une épaisseur de feuille de 500 - 1800 µm contenant des mélanges d'homopolymère, de copolymère, de terpolymère et/ou de polymère greffé du chlorure de vinyle, de polymère greffé de styrène-acrylonitrile-butadiène (ABS), ainsi qu'un plastifiant à base d'un haut polymère à action plastifiante, contenant des groupes polaires, qui présente un poids moléculaire supérieur à 50.000 et qui est compatible avec le polychlorure de vinyle ou bien qui forme avec lui une seule phase, éventuellement avec une couche de mousse ou un moussage dorsal disposé contre la feuille ou contre la feuille inférieure, la feuille étant réalisée comme monofeuille ou comme couche d'une feuille composite, de préférence comme feuille inférieure ou comme couche inférieure d'une feuille composite comprenant une feuille supérieure ou une couche superficielle à base d'un polymère ou d'un mélange de polymères, ainsi qu'éventuellement d'un plastifiant à base d'un haut polymère à action plastifiante contenant des groupes polaires, qui présente un poids moléculaire supérieur à 50.000 et qui est compatible avec le chlorure de polyvinyle ou qui forme une seule phase avec ce dernier, dans lequel, comme mélanges de polymères, sont préférés des mélanges de polychlorure de vinyle avec une ou plusieurs autres résines synthétiques, caractérisée en ce que le plastifiant ou le mélange de plastifiants de la feuille, de la feuille inférieure et/ou de la feuille supérieure, contenant des groupes polaires, est constitué par un terpolymère éthylène-butylacrylate-monoxyde de carbone et/ou un terpolymère éthylène-hexylacrylate-monoxyde de carbone avec une teneur en acrylate d'alkyle supérieure à 12 % (calculée par rapport à 100 parties en poids du plastifiant respectif contenant des groupes polaires) et avec des groupes d'acrylate et de monoxyde de carbone à distribution statistique, en ce qu'on remplace, en tout ou en partie, le polymère greffé de styrène-acrylonitrile-butadiène (ABS) par un autre polymère greffé que l'on prépare à partir d'un copolymère de styrène-acrylonitrile (SAN) et/ou d'un copolymère de styrène-anhydride maléique (SMA) avec un autre élastomère, de préférence par de l'acrylonitrile-styrène-ester acrylique (ASA), et en ce que la ou les couches de feuille, rapportées à 100 parties en poids du mélange de polymères ou de l'alliage de polymères, contiennent, en outre, 2 - 20 parties en poids d'un ou plusieurs adjuvants de mise en oeuvre, 0 - 50 parties en poids d'un additif ou d'un mélange d'additifs, ainsi que 0,1 - 10 parties en poids d'au moins un plastifiant de faible volatilité, la feuille composite comprenant au moins une feuille inférieure ou couche inférieure qui est constituée par (rapportés à 100 % en poids de polymères) 15 - 40 % en poids d'homopolymère, de copolymère, de terpolymère et/ou de polymère greffé du chlorure de vinyle et/ou d'alliages à base de polychlorure de vinyle, 17 - 50 % en poids d'acrylonitrile-butadiène-styrène (ABS), le polymère greffé d'acrylonitrile-butadiène-styrène (ABS) étant remplacé par de l'acrylonitrile-styrène-ester acrylique (ASA) et/ou par du styrène-anhydride maléique-butadiène à concurrence de 40 - 100 % en poids (rapportés à l'ABS mis en oeuvre), 38 - 10 % en poids du plastifiant contenant des groupes polaires, 15 - 0 % en poids d'un copolymère de styrène-anhydride maléique (SMA), d'un copolymère d'ester méthacrylique-acrylique et/ou d'un copolymère de styrène-acrylonitrile (SAN), et/ou 15 - 0 % en poids d'au moins un agent de modification partiellement réticulé et/ou élastomérique sous la forme d'un copolymère d'ester acrylique et/ou d'un copolymère d'acrylonitrile-butadiène, le pourcentage d'homopolymère, de copolymère, de terpolymère et/ou de polymère greffé du chlorure de vinyle dans la ou les feuilles inférieures ou couches inférieures étant inférieur à celui existant dans la ou les feuilles supérieures ou couches supérieures.

2. Feuille selon la revendication 1, caractérisée en ce que la teneur du plastifiant contenant des groupes polaires ou du mélange de plastifiants contenant des groupes polaires, dans la feuille inférieure et/ou dans la feuille supérieure, est supérieure à 5 % en poids et inférieure à 50 % en poids (rapportés à 100 % en poids du mélange de polymères).

3. Feuille selon les revendications 1 et 2, caractérisée en ce que le pourcentage du plastifiant ou mélange de plastifiants contenant des groupes polaires dans la ou les feuilles inférieures ou couches inférieures est supérieur à celui existant dans la ou les feuilles supérieures ou couches supérieures.

4. Feuille selon une ou plusieurs des revendications 1 à 3, caractérisée en ce que la feuille composite constituée par au moins une feuille inférieure ou couche inférieure et par au moins une feuille supérieure ou couche supérieure contient au moins une feuille inférieure ou couche inférieure qui est constituée par (rapportés à 100 % en poids de polymères) 20 - 35 % en poids d'homopolymère, de copolymère, de terpolymère et/ou de polymère greffé du chlorure de vinyle et/ou d'alliages à base de polychlorure de vinyle, 20 - 40 % en poids d'acrylonitrile-butadiène-styrène (ABS), le polymère greffé d'acrylonitrile-butadiène-styrène (ABS) étant remplacé par de l'acrylonitrile-styrène-ester acrylique (ASA) et/ou par du styrène-anhydride maléique-butadiène à concurrence de 40 - 100 % en poids (rapportés à l'ABS mis en oeuvre), 35 - 15 % en poids du plastifiant contenant des groupes polaires, 12,5 - 5 % en poids d'au moins un copolymère du styrène, de l'acrylate et/ou du méthacrylate, de préférence d'un copolymère de styrène-anhydride maléique (SMA), d'un copolymère d'ester méthacrylique-acrylique et/ou d'un copolymère de styrène-acrylonitrile, et/ou 12,5 - 5 % en poids d'au moins un agent de modification partiellement réticulé et/ou élastomérique, de préférence un copolymère d'ester acrylique et/ou un copolymère d'acrylonitrile-butadiène.

5. Feuille selon une ou plusieurs des revendications 1 à 4, caractérisée en ce que la feuille composite contient au moins une feuille supérieure ou couche supérieure qui est constituée (rapportés à 100 % en poids de polymères) par 15 - 80 % en poids, de préférence 30 - 78 % en poids, d'homopolymère, de copolymère, de terpolymère et/ou de polymère greffé du chlorure de vinyle, et/ou d'alliages à base de polychlorure de vinyle, 30 - 0 % en poids, de préférence 27 - 1 % en poids, de polymère greffé et/ou de copolymère à base de styrène, d'acrylonitrile et/ou d'anhydride maléique, de préférence à base d'acrylonitrile-styrène-ester acrylique (ASA) et/ou de styrène-anhydride maléique-butadiène ou constitué par ces derniers, qui peut contenir éventuellement des quantités pondérales minimes (quantités pondérales jusqu'à 4 % en poids, de préférence inférieures à 2 % en poids) de copolymère et/ou de polymère greffé d'acrylonitrile-butadiène-styrène (ABS), 40 - 20 % en poids, de préférence 35 - 21 % en poids, du plastifiant contenant des groupes polaires, 10 - 0 % en poids, de préférence 5 - 0,5 % en poids, d'au moins un copolymère du styrène, de l'acrylate et/ou du méthacrylate, de préférence un copolymère de styrène-anhydride maléique (SMA), un copolymère d'ester méthacrylique-acrylique et/ou un copolymère de styrène-acrylonitrile, et/ou 5 - 0 % en poids, de préférence 3 - 0,5 % en poids, d'au moins un agent de modification partiellement réticulé et/ou élastomère, de préférence un copolymère d'ester acrylique et/ou un copolymère d'acrylonitrile-butadiène.

6. Feuille selon une ou plusieurs des revendications 1 à 5, caractérisée en ce que la feuille ou encore la ou les couches de feuilles, rapportées à 100 parties en poids du mélange de polymères ou de l'alliage de polymères, contiennent 3 - 15 parties en poids d'un ou de plusieurs adjuvants de mise en oeuvre, de préférence de lubrifiants, de stabilisateurs, d'agents améliorant l'aptitude à l'écoulement et/ou d'antioxydants, 0,5 - 30 parties en poids d'un additif ou d'un mélange d'additifs, de préférence d'au moins une matière de charge, d'au moins un agent ignifugeant, d'au moins un colorant ou d'un pigment colorant, ainsi que 0,1 - 10 parties en poids d'au moins un plastifiant à faible volatilité, de préférence qui résiste à la migration.

7. Feuille selon une ou plusieurs des revendications 1 à 6, caractérisée en ce que la feuille est constituée par au moins une feuille inférieure ou couche inférieure et par au moins une feuille supérieure ou couche supérieure, la composition qualitative et/ou quantitative entre la ou les feuilles inférieures ou couches inférieures et la ou les feuilles supérieures ou couches supérieures étant différente.

8. Feuille selon une ou plusieurs des revendications 1 à 7, caractérisée en ce que la feuille superficielle est enduite, sur sa couche superficielle libre, d'une couche de laque ou d'une enduction synthétique, de préférence à base de résines d'acrylate, de résines de polychlorure de vinyle-acrylate, de résines de polyuréthanne et/ou de résines époxydes.
